# EUROPÄISCHE PATENTANMELDUNG

(11) **EP 4 170 443 A1**
(43) Veröffentlichungstag der Anmeldung: **26.04.2023**
(21) Anmeldenummer: 22213933.9
(22) Anmeldetag: 15.05.2014
(51) Int. Cl.: G05B 19/042

(54) **STEUERUNGSEINRICHTUNG UND VERFAHREN ZUM UMSCHALTEN VON EIN-/AUSGABEEINHEITEN EINER STEUERUNGSEINRICHTUNG**

(30) Priorität: 17.05.2013 DE 102013105097
(62) Teilanmeldung aus: 14724725.8
(71) Anmelder: Wago Verwaltungsgesellschaft mbH, 32423 Minden (DE)
(72) Erfinder: BUDA, Aurel, 32423 Minden (DE); GALKA, Peter, 32423 Minden (DE); HILGERS, Detmar, 31683 Obernkirchen (DE)
(74) Vertreter: Bardehle Pagenberg Partnerschaft mbB Patentanwälte Rechtsanwälte

(57) **Zusammenfassung**

Steuerungseinrichtung 1 mit einer Steuerungseinheit 2, 5, die über einen Datenübertragungskanal 3, 6 zum Austausch von Prozessdaten P mit mindestens einer Ein- und/oder Ausgabeeinheit 10 in Kommunikationsverbindung steht, dadurch gekennzeichnet, dass die Steuerungseinrichtung 1 über den Ein-/Ausgabeeinheiten 10 zugeordnete, vorgegebene Energiespar-Prozessdaten V für Energiesparzustände Eₙ der Ein-/Ausgabeeinheiten 10 verfügt, wobei die Ein- und/oder Ausgabeeinheit 10 anstelle der ausgetauschten Prozessdaten P im Energiesparzustand auf die vorgegebenen Energiespar-Prozessdaten V zugreift, wenn ein in der Ein- und/oder Ausgabeeinheit 10 parametriertes Umschaltkriterium C erfüllt ist. Weiterhin wird ein Verfahren zum Umschalten von Ein- und/oder Ausgabeeinheiten 10 einer Steuerungseinrichtung 1 in einen Energiesparzustand beansprucht.

## Beschreibung

Die Erfindung betrifft eine Steuerungseinrichtung mit einer Steuerungseinheit, die über einen Datenbus zum Austausch von Prozessdaten mit mindestens einer Ein- und/oder Ausgabeeinheit in Kommunikationsverbindung steht.

Die Erfindung betrifft weiterhin ein Verfahren zum Umschalten von Ein- und/oder Ausgabeeinheiten einer Steuerungseinrichtung in einen Energiezustand, bei dem der Energieverbrauch durch Busteilnehmer, die an die Ein-/Ausgabeeinheiten anschließbar sind, reduziert wird.

Für Steuerungseinrichtungen, insbesondere speicherprogrammierbaren Steuereinrichtungen, ist es oftmals erforderlich den Energieverbrauch von Busteilnehmern zu reduzieren, die an eine dezentrale feldbusgesteuerte Steuerungseinheit angeschlossen sind.

EP 2 574 997 A1 offenbart ein Verfahren zur Einstellung von Betriebszuständen bei Produktionsanlagen entsprechend dem PROFI-Energy-Standard. Hierzu werden ein Strukturmodell, mindestens ein Prozessmodell sowie ein Betriebszustandsmodell genutzt, um ein Gesamtbetriebszustandsmodell zu erstellen. Dieses Gesamtbetriebszustandsmodell spiegelt sämtliche zeitlichen Abhängigkeiten für das Abschalten von Komponenten einer Prozesssteuerungsanlage wider. Kommandos nach dem PROFI-Energy-Standard werden dabei für das Energiemanagement der einzelnen Komponenten der Anlage genutzt.

WO 2012/113445 offenbart eine Vorrichtung zum Schalten einer Stromversorgung eines elektrisch betreibbaren Gerätes mit einem Eingang für eine erste elektrische Leitung und einem Ausgang für eine zweite elektrische Leitung und einen zwischenliegenden Schalter zum Ein- und Ausschalten der elektrischen Verbindung zwischen dem Eingang und dem Ausgang. Die Steuerungsvorrichtung empfängt über den Eingang auf der ersten elektrischen Leitung gesendete Datensignale, um in Abhängigkeit davon den Schalter anzusteuern. Damit ist ein ferngesteuertes Abschalten von an der Steuerungsvorrichtung angeschlossenen Geräten möglich.

Die EP 2 538 609 A1 zeigt einen Netzwerkknoten, bei dem zumindest ein Teil des Netzwerkknotens in einen energiesparenden Zustand versetzt werden kann, was bedeutet, dass in diesem Teil des Netzwerkknotens keine Daten oder nur eine reduzierte Menge an Daten ausgegeben und/oder empfangen wird. Das Umschalten in einen energiesparenden Zustand kann erst dann erfolgen, wenn alle Netzwerkgeräte, die an diesem Netzwerkanschluss angeschlossen sind, in den Energiesparzustand geschaltet wurden.

In der Druckschrift "Common Application Profil PROFIenergy - Technical Specification for PROFINET - Version 1.1" (PROFIBUS Nutzerorganisation e.V. (PNO); PROFIBUS & PROFINET International (PI), August 2012 (2012-08), XP55131803) werden Verfahren und Techniken spezifiziert, um Energiesparfunktionen in einem PROFINET IO Gerät zu implementieren. Bei den Verfahren teilt eine übergeordnete Steuerung aber immer direkt einem Gerät mit, in welchen Energiesparzustand es übergehen soll.

Solche dezentralen Steuerungseinheiten haben den Nachteil einen relativ großen Hardwareaufwands. Zudem ist der Energiesparzustand für eine Gruppe von Geräten bei der Installation hardwaremäßig vorgegeben und kann nicht flexibel bei der Konfiguration oder sogar im laufenden Betrieb angepasst werden.

DE 10 2009 047 803 A1, DE 10 2009 047 804 A1 und DE 10 2009 047 805 A1 beschreiben ein speicherprogrammierbares Steuerungssystem mit einer Hauptprozessoreinheit und einer Peripherieeinheit, die über ein Bussystem miteinander verbunden sind. Über das Bussystem kann für jede Peripherieeinheit ein ereignisgesteuertes selektives oder gemeinsames Ein- und/oder Ausschalten einer über das Bussystem der jeweiligen Peripherieeinheit zur Verfügung gestellten Stromversorgung ermöglicht werden, um den Energieverbrauch des speicherprogrammierbaren Steuerungssystems zu reduzieren.

Ausgehend hiervon ist es Aufgabe der vorliegenden Erfindung eine verbesserte Steuerungseinrichtung sowie ein verbessertes Verfahren zum Umschalten von Ein- und/oder Ausgabeeinheiten einer solchen Steuerungseinrichtung in einen Energiesparzustand zu schaffen, bei dem die Auswahl, Gruppierung und Ansteuerung von Ein- und/oder Ausgabeeinheiten oder Teilen davon zum Umschalten in einen Energiesparzustand vereinfacht wird.

Die Aufgabe wird durch die Steuerungseinrichtungen mit den Merkmalen des Anspruchs 1 sowie durch das Verfahren mit den Merkmalen des Anspruchs 10 gelöst. Vorteilhafte Ausführungsformen sind in den Unteransprüchen beschrieben.

Bei einer Steuerungseinrichtung mit einer Steuerungseinheit, die über einen Datenübertragungskanal (wie z. B. einem Feldbus) mit mindestens einer Ein-/Ausgabeeinheit in Kommunikationsverbindung steht, wird vorgeschlagen, dass die Steuerungseinrichtung über den Ein-/Ausgabeeinheiten zugeordnete vorgegebene Energiespar-Prozessdaten für Energiesparzustände der Ein-/ Ausgabeeinheiten verfügt, wobei die Ein- und/oder Ausgabeinheit anstelle eines Austauschs von Prozessdaten im Energiesparzustand auf die vorgegebenen Energiespar-Prozessdaten zugreift, wenn ein in der Ein- und/oder Ausgabeeinheit parametrisiertes Umschaltkriterium erfüllt ist.

Bei einer solchen vorzugsweise speicherprogrammierbaren Steuerungseinrichtung werden Prozessdaten z. B. über Prozessdatenabbilder zwischen den Ein-/Ausgabeeinheiten und der Steuerungseinheit ausgetauscht. Eine solche Steuerungseinheit kann eine programmierbare Steuerung (SPS/PLC o.ä.) oder ein zwischengeschalteter Feldbuskoppler oder Feldbuscontroller eines Feldbusknotens sein, der einer übergeordneten Steuerungseinheit untergeordnet ist.

Gemäß der Lehre der vorliegenden Erfindung können ausgewählte Ein- und/oder Ausgabeeinheiten oder Teile davon in einen Energiesparzustand geschaltet werden, wobei dann die für diese Ein- und/oder Ausgabeeinheit bzw. Teile davon vorgegebenen Energiespar-Prozessdaten anstelle der beispielsweise über einen Prozessdatenabbild ausgetauschten Prozessdaten verwendet werden.

Damit lässt sich auf sehr einfache und flexible Weise durch zentrale oder dezentrale Prüfung des Vorliegens von Umschaltaktionen oder ggf. durch Übertragung von Umschaltbefehlen über den Datenübertragungskanal eine Parametrierung und Umschaltung von Ein-/Ausgabeeinheiten einzeln oder in Gruppen erreichen.

Es wird somit vorgeschlagen, den Ein-/Ausgabeeinheiten oder Teilen hiervon mindestens ein Energiesparzustand durch geeignete Energiespar-Prozessdaten zuzuordnen und diese vorgegebenen Energiespar-Prozessdaten als Ersatzwerte für die ansonsten z. B. über ein Prozessdatenabbild ausgetauschten Prozessdaten zu nutzen.

Durch das Abspeichern vorgegebener Energiespar-Prozessdaten, die in den Ein-/Ausgabeeinheiten einschließlich Teilen davon zugeordnet werden, gelingt es auf einfache Weise Energiesparprofile für die verfügbaren Ein-/Ausgabeeinheiten und deren Kanäle mit den daran angeschlossenen Busteilnehmern festzulegen. Der Wechsel in den Energiesparmodus für ausgewählte Ein-/Ausgabeeinheiten und deren Kanäle sowie von Gruppen solcher Kanäle kann dann auf einfache Weise durch Aktivierung eines vorgegebenen Energiesparprofils erfolgen. Eine übergeordnete Steuerung bzw. Steuerungsroutine braucht damit keine Kenntnis über die konkrete Ansteuerung der untergeordneten Einheiten haben, um diese in einen Energiezustand zu überführen. Dies wird vielmehr außerhalb der Steuerung als Energiesparprofil vordefiniert. Zudem wird dem Anwender durch die Definierbarkeit von Energiesparprofilen für einzelne Kanäle oder Gruppen von Kanälen ohne Kenntnis von konkreten Busteilnehmern die flexible Möglichkeit gegeben, diese in gewünschte Energiesparzustände zu überführen.

Bevorzugt ist die Ein- und/oder Ausgabeeinheit eingerichtet, das Vorliegen des Umschaltkriteriums anhand von zur Verfügung gestellten Prozessdaten oder Steuerungsdaten zu überprüfen, um dann in den Energiesparzustand zu wechseln.

Bevorzugt ist die Steuerungseinheit als Feldbuscontroller oder Feldbuskoppler ausgebildet und eingerichtet, das Vorliegen des Umschaltkriteriums anhand von zur Verfügung gestellten Prozessdaten oder Steuerungsdaten zu überprüfen, um dann in den Energiesparzustand zu wechseln.

Bevorzugt ist die die Ein- und/oder Ausgabeeinheit eingerichtet, zu überprüfen, ob das parametrierte Umschaltkriterium durch ein an die Ein- und/oder Ausgabeeinheit übersandtes Umschaltkriterium erfüllt ist.

Dabei ist es besonders vorteilhaft, wenn die vorgegebenen Energiespar-Prozessdaten einzelnen Kanälen der Ein-/Ausgabeeinheiten zugeordnet sind. Die Steuerungseinheit ist dann eingerichtet, ausgewählte Kanäle der Ein-/Ausgabeeinheiten in einen Energiesparzustand zu schalten, indem für den ausgewählten Kanal anstelle einer Nutzung von Prozessdaten des jeweiligen Kanals - z.B. durch Prozessdatenaustausch - auf die zugeordneten vorgegebenen Energiesparprozessdaten zugegriffen wird.

Ein Energiesparprofil mit vorgegebenen Prozessdaten kann somit für einzelne Kanäle der Ein-/Ausgabeeinheiten vorgegeben werden, die dann individuell oder in Gruppen bei Bedarf in den Energiesparmodus versetzt werden. Im Energiesparmodus sind dann die vorgegebenen Energiespar-Prozessdaten für den jeweils in den Energiesparmodus versetzten Kanal vorgreiflich und werden anstelle der ausgetauschten Prozessdaten verwendet.

Hierbei ist denkbar, dass die vorgegebenen Energiespar-Prozessdaten von einer Steuerungseinheit in das Prozessdatenabbild eingeschrieben werden, wobei die Daten des Prozessdatenabbildes dann von dem Controller oder Koppler, der das Prozessabbild beinhaltet, zu den daran angeschlossenen Ein-/Ausgabeeinheiten übertragen werden.

Denkbar ist aber auch, dass die an die Steuerungseinheit über einen Datenübertragungskanal angeschlossenen Ein-/Ausgabeeinheiten selbst nach Erhalt eines Energiesparanfrage (z.B. in Form eines Umschaltkriteriums oder eines Energiesparbefehls) von der Steuerungseinrichtung oder nach Feststellung, dass ein Kriterium zum Umschalten in den Energiesparmodus erfüllt ist, anstelle der über den Datenübertragungskanal ausgetauschten Prozessdaten auf die in der Ein-/Ausgabeeinheit abgespeicherten, vorgegebenen Energiespar-Prozessdaten für den jeweiligen Kanal zugreifen und diese verwenden.

Hierzu können die Ein-/Ausgabeeinheiten jeweils eine Speichereinheit zur Speicherung der ihnen vorgegebenen Energiesparprozessdaten haben.

Denkbar ist aber auch, dass die Steuerungseinheit eine Speichereinheit zur Speicherung der den angeschlossenen Ein-/Ausgabeeinheiten zugeordneten vorgegebenen Energiespar-Prozessdaten hat. Diese abgespeicherten Energiespar-Prozessdaten können dann von der Steuerungseinheit z. B. in das Prozessabbild eingeschrieben werden, wenn eine angesprochene Ein-/Ausgabeeinheit oder ein Kanal hiervon im Energiesparmodus ist.

Eine optionale Ausführungsform sieht vor, dass ein separates Energiespar-Steuerungsmodul in den Datenkanal z.B. zwischen einem Kopfmodul und den daran angeschlossenen Ein/Ausgabeeinheiten eingeschleift ist. Es kann z.B. als Blockmodul eines modularen Feldbusknotens ausgeführt sein. Die Energiespar-Prozessdaten sind dann als das mindestens eine Energiesparprofil vorzugsweise zusammen mit zugehörigen Umschaltkriterien in einer Speichereinheit des Energiespar-Steuerungsmoduls abgespeichert. Das Energiespar-Steuerungsmodul kann optional die Logik zur Feststellung haben, ob für die einzelnen Ein/Ausgabeeinheiten bzw. deren Kanäle die vorgegebenen, abgespeicherten Umschaltkriterien zur Umschaltung in einen jeweiligen Energiezustand erfüllt sind. Dann werden die abgespeicherten Energiespar-Prozessdaten in das Prozessabbild geschrieben oder direkt an die jeweiligen Ein/Ausgabemodule zur weiteren Nutzung übertragen.

Die Ein-/Ausgabeeinheiten sind vorzugsweise mit der Steuerungseinheit über einen Feldbuscontroller oder Feldbuskoppler verbunden. Der Feldbuscontroller / Feldbuskoppler hat dann eine Speichereinheit zur Speicherung eines Prozessabbildes für die auszutauschenden Prozessdaten und zur Speicherung der den angeschlossenen Ein-/Ausgabeeinheiten zugeordneten vorgegeben Energiespar-Prozessdaten.

Für das erfindungsgemäße Verfahren zum Umschalten von Ein-/Ausgabeeinheiten einer Steuerungseinrichtung in einen Energiesparzustand der Ein-/Ausgabeeinheiten wird vorgeschlagen, dass Energiespar-Prozessdaten, die den einzelnen Ein-/Ausgabeeinheiten einschließlich Teilen davon (z. B. Kanälen) zugeordnet werden, in einem Schritt der Konfiguration bzw. Parametrierung abgespeichert werden. Auf diese abgespeicherten Energiespar-Prozessdaten wird dann z. B. im laufenden Betrieb einer Steuerungseinrichtung zugegriffen, wenn eine Ein-/Ausgabeeinheit oder ein Teil davon in einen Energiesparzustand geschaltet wird. Dann nutzt die Ein- und/oder Ausgabeeinheit, wenn ein in der Ein- und/oder Ausgabeeinheit parametrisiertes Umschaltkriterium erfüllt ist, anstelle der zwischen den Ein-/Ausgabeeinheiten und einer über einen Datenübertragungskanal daran angeschlossenen Steuerungseinheit austauschbaren Prozessdaten die für den im Energiesparmodus befindlichen Teil der Ein-/Ausgabeeinheit zugeordneten abgespeicherten Energiespar-Prozessdaten.

Besonders vorteilhaft ist es dabei, wenn das Umschaltverfahren die Schritte aufweist:
- Parametrieren von Kanälen der Ein-/Ausgabeeinheiten mit mindestens einem Energiezustand umfassend mindestens ein dem zu parametrisierenden Kanal zugeordnetes, vorgegebenes Energiespar-Prozessdatum als Ausgangwert für den Kanal, den der Ausgang des Kanals anstelle eines über ein Prozessabbild durch eine Steuerungseinheit vorgegebenes Prozessdatum einnimmt, und umfassend das Umschaltkriterium, und
- Umschalten in den Energiesparzustand nach Prüfung durch die Steuerungseinheit oder durch ein an den Datenübertragungskanal angeschlossenes Energiespar-Steuerungsmodul, ob ein Energiesparzustand durch Vorgabe von Energiespar-Prozessdaten parametriert ist und ob das für den jeweiligen Kanal parametrierte Umschaltkriterium durch ein aktuell mit einer Umschaltanfrage zum Umschalten mindestens eines Kanals von Ein-/Ausgabeeinheiten in einen Energiesparzustand erhaltenes oder durch ein festgestelltes Umschaltkriterium erfüllt ist.

Denkbar ist auch, dass das Umschaltverfahren die Schritte aufweist:
- Parametrieren von Kanälen der Ein-/Ausgabeeinheiten mit mindestens einem Energiezustand, der mindestens ein dem zu parametrisierenden Kanal zugeordnetes vorgegebenes Energiespar-Prozessdatum als Ausgangwert für den Kanal und das Umschaltkriterium umfasst. Der Ausgang des in den Energiesparzustand geschalteten Kanals nimmt dann das vorgegebene Energiespar-Prozessdatum als Ausgangswert anstelle eines über einen Prozessabbild durch eine Steuerungseinheit vorgegebenes Prozessdatum ein.
- Übersenden einer Anfrage zum Umschalten mindestens eines Kanals von Ein-/Ausgabeeinheiten in einen Energiesparzustand enthaltend ein Umschaltkriterium an die mindestens eine Ein-/Ausgabeeinheit und
- Umschalten in den Energiesparzustand nach Prüfung durch die angesprochene Ein-/Ausgabeeinheit, ob ein Energiesparzustand durch Vorgabe von Energiespar-Prozessdaten parametriert ist und ob das für den jeweiligen Kanal parametrierte Umschaltkriterium durch das übersandte Umschaltkriterium erfüllt ist.

Die Erfindung wird nachfolgend anhand eines Ausführungsbeispiels mit den beigefügten Zeichnungen näher erläutert. Es zeigen:
- Figur 1: - Blockdiagramm einer Steuerungseinrichtung mit einer Steuerungseinheit, einem Feldbuscontroller/-koppler und daran angeschlossenen Ein-/Ausgabeeinheiten;
- Figur 2: - Flussdiagramm eines Verfahrens zum Umschalten von Ein-/Ausgabeeinheiten in einen Energiesparzustand.

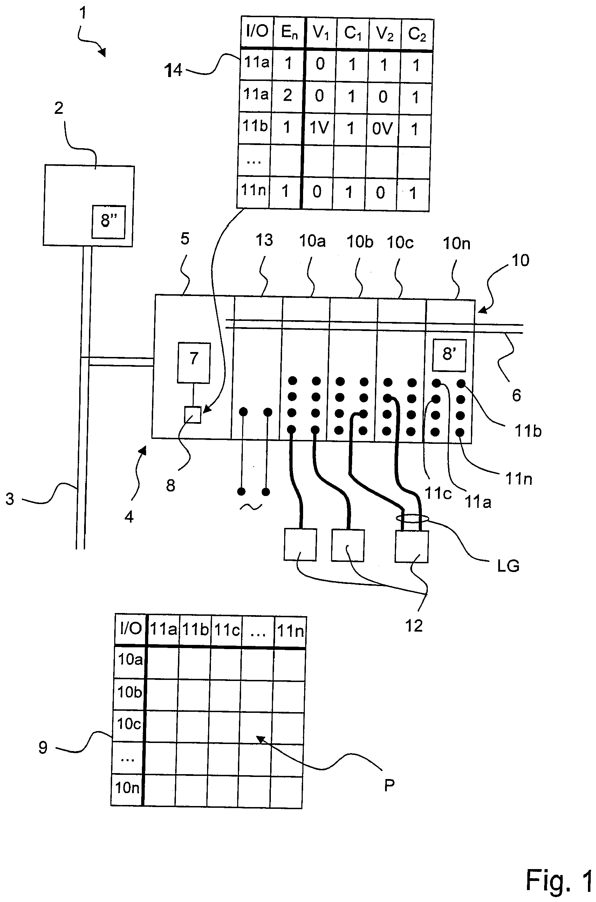

Figur 1 lässt ein Blockdiagramm einer Steuerungseinrichtung 1 erkennen, die in an sich bekannter Weise eine speicherprogrammierbare Steuerungseinheit 2 hat. Die speicherprogrammierbare Steuerungseinheit 2 ist eingerichtet, um ein Steuerungsprogramm auszuführen und Prozessdaten P über einen Feldbus 3 mit mindestens einem Netzknoten 4 auszutauschen. Der Netzknoten 4 hat einen Feldbuscontroller/-koppler 5. Der Feldbuscontroller/-koppler 5 ist eingerichtet, um Daten zwischen dem Protokoll des Feldbusses 3 auf das Kommunikationsprotokoll eines internen proprietären Datenübertragungskanals 6 umzusetzen und umgekehrt. Hierzu verfügt der Feldbuscontroller/-koppler 5 über eine Recheneinheit 7 sowie über eine damit verbundene Speichereinheit 8. In der Speichereinheit 8 wird ein Prozessdatenabbild 9 hinterlegt, in dem Prozessdaten P für die an den Feldbuscontroller/-koppler 5 über den internen Datenübertragungskanal 6 angeschlossenen Ein-/Ausgabeeinheiten 10 abgelegt werden.

Damit findet ein Austausch von Prozessdaten P der aus dem Prozessabbild 9 an die angeschlossenen Ein-/Ausgabeeinheiten 10 und umgekehrt über den Datenübertragungskanal 6 statt. Auf diese Weise können von der Steuerungseinheit 2 über den Feldbus 3 vorgegebene Prozessdaten P in das Prozessdatenabbild 9 eingeschrieben werden. Der Feldbuscontroller/-koppler 5 überträgt diese Prozessdaten P aus dem Prozessdatenabbild 9 z. B. zyklisch gemäß des Kommunikationsprotokolls des Datenübertragungskanals 6 an die Ein-/Ausgabeeinheiten 10. Diese Ein-/Ausgabeeinheiten 10 können ihrerseits Prozessdaten P über den Datenübertragungskanal 6 in das Prozessdatenabbild 9 schreiben. Diese Prozessdaten P können dann vom Feldbuscontroller/-koppler 5 über den Feldbus 3 an die Steuerungseinheit 2 übergeben werden.

Die Ein-/Ausgabeeinheiten 10 haben jeweils einen oder eine Mehrzahl von Kanälen 11a, 11b, ..., 11n, an die Busteilnehmer 12 angeschlossen werden können. Solche Busteilnehmer 12 können Aktoren, Sensoren oder sonstige Geräte sein.

Die Busteilnehmer 12 werden über einen Spannungseinspeisemodul 13 des modular aufgebauten Netzknotens 4 mit elektrischer Energie (Leistungsspannung) versorgt. Hierbei handelt es sich beispielsweise um eine 24 Volt, 110 Volt oder 220 Volt-Spannungsversorgung, die einen wesentlich höheren Stromfluss (> 5 Ampere) erlaubt, als die Spannungsversorgung für die Elektronik des Netzknotens 4, welche üblicherweise zusammen mit dem Datenübertragungskanal 6 bereitgestellt wird.

Um nun auf einfache und flexible Weise einzelne Ein-/Ausgabeeinheiten 10 oder einzelne Kanäle 11a, 11b, ..., 11n der Ein-/Ausgabeeinheiten 10 einzeln oder in Gruppen in einen Energiesparmodus zu versetzen, bei dem der Energieverbrauch reduziert wird, erfolgt eine Parametrierung der Kanäle 11a, 11b, ..., 11n mit einer Anzahl von 1 bis n Energiezuständen Eₙ. Ein Energiezustand Eₙ wird dabei durch zwei Attribute beschrieben. Zum einen ist ein Energiesparprozessdatum V vorgesehen, welches den Ausgangswert des zugeordneten Kanals beschreibt, den der Kanal 11a, 11b, ..., 11n einnehmen sollen, wenn dieser in den Energiezustand geschaltet ist. Weiterhin ist ein Umschaltkriterium C vorgesehen, das ein Entscheidungsmerkmal beschreibt, um in einen Energiezustand zu wechseln. So kann z. B. entsprechend des PROFIenergy-Standards die Angabe einer Pausenzeit als Kriterium C verwendet werden. Bei dem sercos Energy-Standard wird das Kriterium C durch eine Identifikationsnummer beschrieben.

Im Rahmen des Engineerings werden nun Ausgangskanäle 11a, 11b, ..., 11n oder Gruppen von solchen Ausgangskanälen zugehöriger Ein-/Ausgabeeinheiten 10 mindestens ein Energiezustand Eₙ zugeordnet. Die zugeordneten Energiezustände Eₙ können dann in einer Tabelle 14 hinterlegt werden. Die Energiezustands-Tabelle 14 kann beispielsweise in dem Feldbuscontroller/- koppler 5, der übergeordneten Steuerungseinheit 2 oder aber auch die einzelnen Ein-/Ausgabeeinheiten 10 in einer dort vorhandenen Speichereinheit 8, 8', 8" abgelegt werden. Für den Fall, dass die Energiezustands-Tabelle 14 in den einzelnen Ein-/Ausgabeeinheiten 10 abgelegt wird, befinden sich in der Tabelle bevorzugt dann nur die Energiezustände für die Kanäle 11a, 11b, ..., 11n der entsprechenden Ein-/Ausgabeeinheit 10.

Je nach Ausprägung eines Ausgangkanals 11a, 11b, ..., 11n können unterschiedliche Energieersatzwerte V konfiguriert werden. So ist denkbar, einen einfachen digitalen Ausgangswert 0 (AUS) oder 1 (EIN) als Energiesparprozessdatum vorzugeben. Für analoge Ausgänge ist das Energiespar-Prozessdatum innerhalb des unterstützten Ausgangsbereichs frei wählbar. Bei komplexen Ein-/Ausgabeeinheiten 10 sind die Energie-Prozessdaten anwendungsspezifisch im unterstützten Bereich wählbar.

Zur einfacheren Adressierung ist es denkbar, Gruppen von Kanälen 11a, 11b, ..., 11n oder Gruppen von Ein-/Ausgabeeinheiten 10 zu konfigurieren. Damit wird das Ansteuern von Energiezuständen im laufenden Betrieb vereinfacht, indem die Konfiguration der Energiezustände von Ausgängen von Busklemmeinheiten verwaltet wird. Die Konfiguration, Verwaltung und Speicherung von Gruppen erfolgt beispielsweise von dem Feldbuscontroller/-koppler 5. Die Energiesparzustände von Gruppen können unabhängig voneinander im laufenden Betrieb angesteuert werden. Der Feldbuscontroller/-koppler 5 kann dabei eine Anzahl von 1 bis n Gruppen verwalten.

Durch die Einführung von Gruppen können logische Einheiten, z. B. für zusammengehörige Anlagenteile, verbunden über verschiedene Ausgangskanäle 11a, 11b, ..., 11n und Busklemmeneinheiten (Ein-/Ausgabeeinheiten 10) gebildet werden. Unterschiedliche Anlagenteile können hierdurch entkoppelt voneinander in Energiezustände versetzt werden. Zeitliche oder andere Abhängigkeiten können durch die Steuerungseinheit 2 berücksichtigt werden.

Ferner kann eine Gruppe auch alle Kanäle 11a, 11b, ..., 11n der Ein-/Ausgabeeinheiten 10 enthalten. Hierdurch können alle Ausgangskanäle 11a, 11b, ..., 11n über eine Adresse verwaltet und damit mit einem Kommando über den Feldbus 3 in Energiesparzustände versetzt werden.

Damit können Energiesparzustände bzw. Energiesparfunktionen auf einzelne Kanäle 11a, 11b, ..., 11n und beliebige Gruppen von solchen Kanälen angewendet werden.

Anhand des rechten Busteilnehmers 12 wird deutlich, dass Busteilnehmer 12 auch an mehrere Kanäle 11a, 11b, ..., 11n desselben oder unterschiedlicher Ein/Ausgabeeinheiten 10 angeschlossen werden können. Diese Kanäle 11a, 11b, ..., 11n sind dann zu einer logischen (Unter-)Gruppe LG gebündelt, wobei Energiezustände Eₙ für eine solche logische (Unter-)Gruppe LG insgesamt festlegbar sind.

Die Ansteuerung von Energiefunktionen kann über z.B. einen Nicht-Echtzeitkanal des Feldbusses 3 bzw. des Datenübertragungskanals 6 erfolgen. Anfragen zum Ansteuern eines Energiezustandes können dabei auf einzelne Ausgangskanäle 11a, 11b, ..., 11n bzw. Ausgangskanalgruppen oder auf die durch den Feldbuscontroller/-koppler 5 verwalteten Gruppen von Ausgangskanälen 11a, 11b, ..., 11n angewendet werden.

Der Ablauf zum Umschalten in einen Energiesparzustand für einen Ausgangskanal 11a, 11b, ..., 11n ist vereinfacht wie folgt:
1) Es erfolgt eine Anfrage durch die Steuerungseinheit 2 über den Feldbus 3, den Energiezustand einzunehmen. Als Parameter enthält eine solche Anfrage immer ein Kriterium C. Ist für den adressierten Ausgangkanal 11a, 11b, ..., 11n ein Energiezustand Eₙ konfiguriert, der diesem Kriterium C entspricht, wird der Ausgang dieses Kanals 11a, 11b, ..., 11n auf den zugehörigen Energie-Ersatzwert V als zugeordnetes vorgegebenes Energiespar-Prozessdatum des konfigurierten Energiezustandes Eₙ geschaltet. Die synchronen Echtzeit-Prozessdaten werden ab dann nicht mehr auf diesen Ausgangskanal 11a, 11b, ..., 11n abgebildet.
2) Es erfolgt eine Anfrage, den Energiezustand zu verlassen. Der adressierte Ausgangskanal 11a, 11b, ..., 11n verlässt dann den Energiezustand Eₙ und wechselt dann in den normalen Prozessdatenaustausch z. B. über ein Prozessabbild.

Der Ablauf zum Umschalten in einen Energiezustand für Gruppen ist vereinfacht wie folgt:
1) Es erfolgt eine Anfrage, einen Energiezustand Eₙ einzunehmen. Als Parameter enthält eine solche Anfrage immer ein Kriterium C. Für jeden Ausgangskanal 11a, 11b, ..., 11n bzw. jede Gruppe solcher Ausgangskanäle der adressierten Gruppe wird geprüft, ob ein Energiezustand Eₙ mit passenden Kriterium C konfiguriert ist. Falls dies der Fall ist, wird der Ausgang dieses Kanals 11a, 11b, ..., 11n auf den zugehörigen Energieersatzwert V, d. h. das vorgegebene Energiespar-Prozessdatum des konfigurierten Energiezustands Eₙ geschaltet. Die synchronen Echtzeitprozessdaten werden ab dann nicht mehr auf diese Ausgangskanäle 11a, 11b, ..., 11n abgebildet.
2) Es erfolgt eine Anfrage, den Energiezustand Eₙ wieder zu verlassen. Alle konfigurierten Ausgangskanäle 11a, 11b, ..., 11n der adressierten Gruppe verlassen dann ihren Energiezustand Eₙ, soweit sie sich in einem solchen befinden und wechseln zurück in den normalen Prozessdatenaustausch.

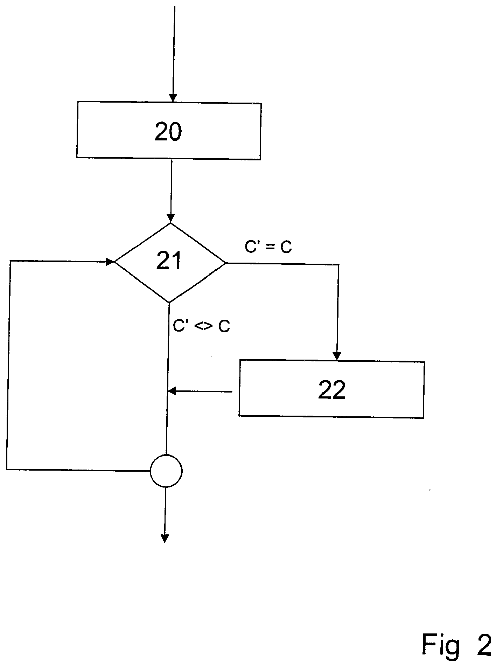

Das Verfahren wird anhand der Figur 2 nochmals deutlicher.

In einem Schritt 20 erfolgt eine Konfiguration indem den einzelnen Ein-/Ausgabeeinheiten 10 bzw. deren Kanäle 11a, 11b, ..., 11n zugeordnete vorgegebene Energiespar-Prozessdaten V (Energie-Ersatzwerte) für einen Energiesparzustand Eₙ abgespeichert werden.

Im laufenden Betrieb, bei dem eine Steuereinheit 2 z. B. ein speicherprogrammiertes Programm ablaufen lässt, können einzelne Kanäle 11a, 11b, ..., 11n oder Gruppen davon sowie einzelne ausgewählte Ein-/Ausgabeeinheiten 10 bzw. Gruppen davon bei Bedarf in einen Energiesparzustand versetzt werden. Hierbei wird im Prozess wiederholt im Schritt 21 geprüft, ob ein für mindestens einen Energiezustand Eₙ vorgegebenes und abgespeichertes Kriterium C erfüllt ist (Ist C' = C erfüllt?) Wenn dies der Fall ist, wird für die Ausgangskanäle 11a, 11b, ..., 11n, bei denen das Kriterium C erfüllt ist, ein Umschalten in den Energiesparzustand im Schritt 22 veranlasst. Hierzu erfolgt ein Zugreifen auf die abgespeicherten Energiespar-Prozessdaten V (Energie-Ersatzwerte) der betroffenen Ein-/Ausgabeeinheiten 10 bzw. der betroffenen Kanäle 11a, 11b, ..., 11n, wobei dann diese abgespeicherten Energiespar-Prozessdaten V anstelle von zwischen der Ein-/Ausgabeeinheit 10 und einer über den Datenübertragungskanal 6 daran angeschlossenen Steuerungseinheit 2, 5 austauschbaren Prozessdaten genutzt werden.

In dem dargestellten Ausführungsbeispiel kann das Umschalten in den Energiesparmodus auch durch den Feldbuscontroller/-koppler 5 selbst als Steuerungseinheit ohne übergeordnete Steuerungseinheit 2 oder autonom durch die Ein-/Ausgabeeinheiten 10 erfolgen. Es ist dabei lediglich erforderlich, dass der Feldbuscontroller/-koppler 5 oder die Ein-/Ausgabeeinheiten 10 durch geeignete Hard- und/oder Software in der Lage sind, das Vorliegen eines Kriteriums C anhand von zur Verfügung gestellten Prozessdaten oder Steuerungsdaten zu überprüfen, um dann in den Energiesparzustand zu wechseln.

Weitere bevorzugte Ausführungsformen:
1. Steuerungseinrichtung (1) mit einer Steuerungseinheit (2, 5), die über einen Datenübertragungskanal (3, 6) zum Austausch von Prozessdaten (P) mit mindestens einer Ein- und/oder Ausgabeeinheit (10) in Kommunikationsverbindung steht, dadurch gekennzeichnet, dass die Steuerungseinrichtung (1) über den Ein-/Ausgabeeinheiten (10) zugeordnete, vorgegebene Energiespar-Prozessdaten (V) für Energiesparzustände (Eₙ) verfügt und eingerichtet ist, um anstelle der ausgetauschten Prozessdaten (P) im Energiesparzustand auf die vorgegebenen Energiespar-Prozessdaten (V) zuzugreifen.
2. Steuerungseinrichtung (1) nach Ausführungsform 1, dadurch gekennzeichnet, dass die vorgegebenen Energiespar-Prozessdaten (V) den einzelnen Kanälen (11a, 11b, ..., 11n) der Ein-/Ausgabeeinheiten (10) zugeordnet sind, wobei die Steuerungseinheit (2, 5) eingerichtet ist, ausgewählte Kanäle (11a, 11b, ..., 11n) der Ein-/Ausgabeeinheiten (10) in einen Energiesparzustand zu schalten, indem für den ausgewählten Kanal (11a, 11b, ..., 11n) anstelle der Nutzung von Prozessdaten (P) des jeweiligen Kanals (11a, 11b, ..., 11n) auf die zugeordneten vorgegebenen Energiespar-Prozessdaten (V) zugegriffen wird.
3. Steuerungseinrichtung (1) nach Ausführungsform 1 oder 2, dadurch gekennzeichnet, dass die Steuerungseinrichtung (1) eingerichtet ist, Gruppen von Ein-/Ausgabeeinheiten (10) oder Gruppen von Kanälen (11a, 11b, ..., 11n) von Ein-/Ausgabeeinheiten (10) zum Zugriff auf die vorgegebenen Energiespar-Prozessdaten (V) in einen Energiesparmodus zu schalten.
4. Steuerungseinrichtung (1) nach einem der vorhergehenden Ausführungsformen, dadurch gekennzeichnet, dass die Ein-/Ausgabeeinheiten (10) eine Speichereinheit (8) zur Speicherung der ihnen vorgegebenen Energiespar-Prozessdaten (V) haben.
5. Steuerungseinrichtung (1) nach einem der vorhergehenden Ausführungsformen, dadurch gekennzeichnet, dass die Steuerungseinheit (2, 5) eine Speichereinheit (8, 8") zur Speicherung der den angeschlossenen Ein-/Ausgabeeinheiten (10) zugeordneten vorgegebenen Energiespar-Prozessdaten (V) hat.
6. Steuerungseinrichtung (1) nach einem der vorhergehenden Ausführungsformen, dadurch gekennzeichnet, dass die Ein-/Ausgabeeinheiten (10) mit der Steuerungseinheit (2) über einen Feldbuscontroller oder Feldbuskoppler (5) verbunden sind, wobei der Feldbuscontroller oder Feldbuskoppler (5) eine Speichereinheit (8) zur Speicherung eines Prozessabbildes (9) für die auszutauschenden Prozessdaten (P) und zur Speicherung der den angeschlossenen Ein-/Ausgabeeinheiten (10) zugeordneten vorgegebenen Energiespar-Prozessdaten (V) hat.
7. Verfahren zum Umschalten von Ein- und/oder Ausgabeeinheiten (10) einer Steuerungseinrichtung (1) in einen Energiesparzustand, bei dem der Energieverbrauch durch Busteilnehmer (12), die an die Ein-/Ausgabeeinheiten (10) anschließbar sind, reduziert wird, gekennzeichnet durch
   - Abspeichern von vorgegebenen Energiespar-Prozessdaten (V) für mindestens einen Energiesparzustand, die den einzelnen Ein-/Ausgabeeinheiten (10) zugeordnet sind;
   - Zugreifen auf die abgespeicherten Energiespar-Prozessdaten (V) einer Ein-/Ausgabeeinheit (10), wenn die Ein-/Ausgabeeinheit (10) mindestens teilweise in einen Energiesparzustand geschaltet wurde, wobei dann diese abgespeicherten Energiespar-Prozessdaten (V) anstelle von zwischen der Ein-/Ausgabeeinheit (10) und einer daran über einen Datenübertragungskanal (3, 6) angeschlossenen Steuerungseinheit (2, 5) austauschbaren Prozessdaten (P) genutzt werden.
8. Verfahren nach Ausführungsform 7, gekennzeichnet durch Abspeichern der vorgegebenen Energiespar-Prozessdaten (V) für einzelne Kanäle (11a, 11b, ..., 11n) von Ein-/Ausgabeeinheiten (10) und Zugreifen auf diese vorgegebenen Energiespar-Prozessdaten (V), wenn ein zugeordneter Kanal (11a, 11b, ..., 11n) in einen Energiesparzustand versetzt wurde.
9. Verfahren nach Ausführungsform 7 oder 8, dadurch gekennzeichnet, dass das Abspeichern der vorgegebenen Energiespar-Prozessdaten (V) in Speichereinheiten (8, 8', 8") der Ein-/Ausgabeeinheiten (10), der Steuerungseinheit (2), einem zwischen einer Steuerungseinheit (2) und den Ein-/Ausgabeeinheiten (10) geschalteten Feldbuscontroller oder Feldbuskopplerkoppler (5) und/oder einem an den Datenübertragungskanal (3, 6) angeschlossenen Energiespar-Steuerungsmodul erfolgt.
10. Verfahren nach einem der Ausführungsformen 7 bis 9, gekennzeichnet durch gruppenbezogenes Abspeichern von vorgegebenen Energiespar-Prozessdaten (V) für eine Gruppe von Ein-/Ausgabeeinheiten (10) oder für eine Gruppe von Kanälen (11a, 11b, ..., 11n) solcher Ein-/Ausgabeeinheiten (10) und Zugreifen auf die abgespeicherten Energiespar-Prozessdaten (V) einer solchen Gruppe, wenn die Ein-/Ausgabeeinheiten (10) oder Kanäle (11a, 11b, ..., 11n) der Gruppe insgesamt in einen Energiesparzustand versetzt werden.
11. Verfahren nach einem der Ausführungsformen 7 bis 10, gekennzeichnet durch
   - Parametrieren von Kanälen (11a, 11b, ..., 11n) der Ein-/Ausgabeeinheiten (10) mit mindestens einem Energiezustand umfassend mindestens ein dem zu parametrisierenden Kanal (11a, 11b, ..., 11n) zugeordnetes, vorgegebenes Energiespar-Prozessdatum (V) als Ausgangwert für den Kanal (11a, 11b, ..., 11), den der Ausgang des Kanals (11a, 11b, ..., 11n) anstelle eines über ein Prozessabbild (9) durch eine Steuerungseinheit (2, 5) vorgegebenes Prozessdatum (P) einnimmt, und umfassend ein Umschaltkriterium (C),
   - Übersenden einer Anfrage zum Umschalten mindestens eines Kanals (11a, 11b, ..., 11n) von Ein-/Ausgabeeinheiten (10) in einen Energiesparzustand enthaltend ein Umschaltkriterium (C) an die mindestens eine Ein-/Ausgabeeinheit (10) und
   - Umschalten in den Energiesparzustand nach Prüfung durch die angesprochene Ein-/Ausgabeeinheit (10), ob ein Energiesparzustand (Eₙ) durch Vorgabe von Energiespar-Prozessdaten (V) parametriert ist und ob das für den jeweiligen Kanal (11a, 11b, ..., 11n) parametrierte Umschaltkriterium (C) durch das übersandte Umschaltkriterium (C)erfüllt ist.
12. Verfahren nach einem der Ausführungsformen 7 bis 10, gekennzeichnet durch
   - Parametrieren von Kanälen (11a, 11b, ..., 11n) der Ein-/Ausgabeeinheiten (10) mit mindestens einem Energiezustand umfassend mindestens ein dem zu parametrisierenden Kanal (11a, 11b, ..., 11n) zugeordnetes, vorgegebenes Energiespar-Prozessdatum (V) als Ausgangwert für den Kanal (11a, 11b, ..., 11), den der Ausgang des Kanals (11a, 11b, ..., 11n) anstelle eines über ein Prozessabbild (9) durch eine Steuerungseinheit (2, 5) vorgegebenes Prozessdatum (P) einnimmt, und umfassend ein Umschaltkriterium (C), und
   - Umschalten in den Energiesparzustand nach Prüfung durch die Steuerungseinheit (2, 5) oder durch ein an den Datenübertragungskanal (3, 6) angeschlossenes Energiespar-Steuerungsmodul, ob ein Energiesparzustand (Eₙ) durch Vorgabe von Energiespar-Prozessdaten (V) parametriert ist und ob das für den jeweiligen Kanal (11a, 11b, ..., 11n) parametrierte Umschaltkriterium (C) durch ein aktuell mit einer Umschaltanfrage zum Umschalten mindestens eines Kanals (11a, 11b, ..., 11n) von Ein-/Ausgabeeinheiten (10) in einen Energiesparzustand erhaltenes oder durch ein festgestelltes Umschaltkriterium (C') erfüllt ist.

## Patentansprüche

1. Steuerungseinrichtung (1) mit einer Steuerungseinheit (2, 5), die über einen Datenübertragungskanal (3, 6) zum Austausch von Prozessdaten (P) mit mindestens einer Ein- und/oder Ausgabeeinheit (10) in Kommunikationsverbindung steht, **dadurch gekennzeichnet, dass** die Steuerungseinrichtung (1) über den Ein-/Ausgabeeinheiten (10) zugeordnete, vorgegebene Energiespar-Prozessdaten (V) für Energiesparzustände (Eₙ) der Ein-/Ausgabeeinheiten (10) verfügt, wobei die Ein- und/oder Ausgabeeinheit (10) anstelle der ausgetauschten Prozessdaten (P) im Energiesparzustand auf die vorgegebenen Energiespar-Prozessdaten (V) zugreift, wenn ein in der Ein- und/oder Ausgabeeinheit (10) parametriertes Umschaltkriterium (C) erfüllt ist.

2. Steuerungseinrichtung (1) nach Anspruch 1, wobei die Ein- und/oder Ausgabeeinheit (10) eingerichtet ist, das Vorliegen des Umschaltkriteriums (C) anhand von zur Verfügung gestellten Prozessdaten oder Steuerungsdaten zu überprüfen, um dann in den Energiesparzustand zu wechseln.

3. Steuerungseinrichtung (1) nach Anspruch 1, wobei die Steuerungseinheit (5) als Feldbuscontroller (5) oder Feldbuskoppler (5) ausgebildet ist, und eingerichtet ist, das Vorliegen des Umschaltkriteriums (C) anhand von zur Verfügung gestellten Prozessdaten oder Steuerungsdaten zu überprüfen, um dann in den Energiesparzustand zu wechseln.

4. Steuerungseinrichtung (1) nach Anspruch 1 oder 3, wobei die Ein- und/oder Ausgabeeinheit (10) eingerichtet ist, zu überprüfen, ob das parametrierte Umschaltkriterium (C) durch ein an die Ein- und/oder Ausgabeeinheit (10) übersandtes Umschaltkriterium (C) erfüllt ist.

5. Steuerungseinrichtung (1) nach einem der vorherigen Ansprüche, **dadurch gekennzeichnet, dass** die vorgegebenen Energiespar-Prozessdaten (V) den einzelnen Kanälen (11a, 11b, ..., 11n) der Ein-/Ausgabeeinheiten (10) zugeordnet sind, wobei die Steuerungseinheit (2, 5) eingerichtet ist, ausgewählte Kanäle (11a, 11b, ..., 11n) der Ein-/Ausgabeeinheiten (10) in einen Energiesparzustand zu schalten, indem für den ausgewählten Kanal (11a, 11b, ..., 11n) anstelle der Nutzung von Prozessdaten (P) des jeweiligen Kanals (11a, 11b, ..., 11n) auf die zugeordneten vorgegebenen Energiespar-Prozessdaten (V) zugegriffen wird.

6. Steuerungseinrichtung (1) nach einem der vorherigen Ansprüche, **dadurch gekennzeichnet, dass** die Steuerungseinrichtung (1) eingerichtet ist, Gruppen von Ein-/Ausgabeeinheiten (10) oder Gruppen von Kanälen (11a, 11b, ..., 11n) von Ein-/Ausgabeeinheiten (10) zum Zugriff auf die vorgegebenen Energiespar-Prozessdaten (V) in einen Energiesparmodus zu schalten.

7. Steuerungseinrichtung (1) nach einem der vorhergehenden Ansprüche, **dadurch gekennzeichnet, dass** die Ein-/Ausgabeeinheiten (10) eine Speichereinheit (8) zur Speicherung der ihnen vorgegebenen Energiespar-Prozessdaten (V) haben.

8. Steuerungseinrichtung (1) nach einem der vorhergehenden Ansprüche, **dadurch gekennzeichnet, dass** die Steuerungseinheit (2, 5) eine Speichereinheit (8, 8") zur Speicherung der den angeschlossenen Ein-/Ausgabeeinheiten (10) zugeordneten vorgegebenen Energiespar-Prozessdaten (V) hat.

9. Steuerungseinrichtung (1) nach einem der vorhergehenden Ansprüche, **dadurch gekennzeichnet, dass** die Ein-/Ausgabeeinheiten (10) mit der Steuerungseinheit (2) über einen Feldbuscontroller oder Feldbuskoppler (5) verbunden sind, wobei der Feldbuscontroller oder Feldbuskoppler (5) eine Speichereinheit (8) zur Speicherung eines Prozessabbildes (9) für die auszutauschenden Prozessdaten (P) und zur Speicherung der den angeschlossenen Ein-/Ausgabeeinheiten (10) zugeordneten vorgegebenen Energiespar-Prozessdaten (V) hat.

10. Verfahren zum Umschalten von Ein- und/oder Ausgabeeinheiten (10) einer Steuerungseinrichtung (1) in einen Energiesparzustand der Ein-/Ausgabeeinheiten (10), bei dem der Energieverbrauch durch Busteilnehmer (12), die an die Ein-/Ausgabeeinheiten (10) anschließbar sind, reduziert wird, **gekennzeichnet durch**
- Abspeichern von vorgegebenen Energiespar-Prozessdaten (V) für mindestens einen Energiesparzustand, die den einzelnen Ein-/Ausgabeeinheiten (10) zugeordnet sind;
- Zugreifen auf die abgespeicherten Energiespar-Prozessdaten (V) einer Ein-/Ausgabeeinheit (10), wenn die Ein-/Ausgabeeinheit (10) mindestens teilweise in einen Energiesparzustand geschaltet wird, wobei dann die Ein- und/oder Ausgabeeinheit (10) diese abgespeicherten Energiespar-Prozessdaten (V) anstelle von zwischen der Ein-/Ausgabeeinheit (10) und einer daran über einen Datenübertragungskanal (3, 6) angeschlossenen Steuerungseinheit (2, 5) austauschbaren Prozessdaten (P) nutzt, wenn ein in der Ein- und/oder Ausgabeeinheit (10) parametriertes Umschaltkriterium (C) erfüllt ist.

11. Verfahren nach Anspruch 10, **gekennzeichnet durch** Abspeichern der vorgegebenen Energiespar-Prozessdaten (V) für einzelne Kanäle (11a, 11b, ..., 11n) von Ein-/Ausgabeeinheiten (10) und Zugreifen auf diese vorgegebenen Energiespar-Prozessdaten (V), wenn ein zugeordneter Kanal (11a, 11b, ..., 11n) in einen Energiesparzustand versetzt wurde.

12. Verfahren nach Anspruch 10 oder 11, **dadurch gekennzeichnet, dass** das Abspeichern der vorgegebenen Energiespar-Prozessdaten (V) in Speichereinheiten (8, 8', 8") der Ein-/Ausgabeeinheiten (10), der Steuerungseinheit (2), einem zwischen einer Steuerungseinheit (2) und den Ein-/Ausgabeeinheiten (10) geschalteten Feldbuscontroller oder Feldbuskoppler (5) und/oder einem an den Datenübertragungskanal (3, 6) angeschlossenen Energiespar-Steuerungsmodul erfolgt.

13. Verfahren nach einem der Ansprüche 10 bis 12, **gekennzeichnet durch** gruppenbezogenes Abspeichern von vorgegebenen Energiespar-Prozessdaten (V) für eine Gruppe von Ein-/Ausgabeeinheiten (10) oder für eine Gruppe von Kanälen (11a, 11b, ..., 11n) solcher Ein-/Ausgabeeinheiten (10) und Zugreifen auf die abgespeicherten Energiespar-Prozessdaten (V) einer solchen Gruppe, wenn die Ein-/Ausgabeeinheiten (10) oder Kanäle (11a, 11b, ..., 11n) der Gruppe insgesamt in einen Energiesparzustand versetzt werden.

14. Verfahren nach einem der Ansprüche 10 bis 13, **gekennzeichnet durch**
- Parametrieren von Kanälen (11a, 11b, ..., 11n) der Ein-/Ausgabeeinheiten (10) mit mindestens einem Energiezustand umfassend mindestens ein dem zu parametrisierenden Kanal (11a, 11b, ..., 11n) zugeordnetes, vorgegebenes Energiespar-Prozessdatum (V) als Ausgangwert für den Kanal (11a, 11b, ..., 11), den der Ausgang des Kanals (11a, 11b, ..., 11n) anstelle eines über ein Prozessabbild (9) durch eine Steuerungseinheit (2, 5) vorgegebenes Prozessdatum (P) einnimmt, und umfassend das Umschaltkriterium (C),
- Übersenden einer Anfrage zum Umschalten mindestens eines Kanals (11a, 11b, ..., 11n) von Ein-/Ausgabeeinheiten (10) in einen Energiesparzustand enthaltend ein Umschaltkriterium (C) an die mindestens eine Ein-/Ausgabeeinheit (10) und
- Umschalten in den Energiesparzustand nach Prüfung durch die angesprochene Ein-/Ausgabeeinheit (10), ob ein Energiesparzustand (Eₙ) durch Vorgabe von Energiespar-Prozessdaten (V) parametriert ist und ob das für den jeweiligen Kanal (11a, 11b, ..., 11n) parametrierte Umschaltkriterium (C) durch das übersandte Umschaltkriterium (C) erfüllt ist.

15. Verfahren nach einem der Ansprüche 10 bis 13, **gekennzeichnet durch**
- Parametrieren von Kanälen (11a, 11b, ..., 11n) der Ein-/Ausgabeeinheiten (10) mit mindestens einem Energiezustand umfassend mindestens ein dem zu parametrisierenden Kanal (11a, 11b, ..., 11n) zugeordnetes, vorgegebenes Energiespar-Prozessdatum (V) als Ausgangwert für den Kanal (11a, 11b, ..., 11), den der Ausgang des Kanals (11a, 11b, ..., 11n) anstelle eines über ein Prozessabbild (9) durch eine Steuerungseinheit (2, 5) vorgegebenes Prozessdatum (P) einnimmt, und umfassend das Umschaltkriterium (C), und
- Umschalten in den Energiesparzustand nach Prüfung durch die Steuerungseinheit (2, 5) oder durch ein an den Datenübertragungskanal (3, 6) angeschlossenes Energiespar-Steuerungsmodul, ob ein Energiesparzustand (Eₙ) durch Vorgabe von Energiespar-Prozessdaten (V) parametriert ist und ob das für den jeweiligen Kanal (11a, 11b, ..., 11n) parametrierte Umschaltkriterium (C) durch ein aktuell mit einer Umschaltanfrage zum Umschalten mindestens eines Kanals (11a, 11b, ..., 11n) von Ein-/Ausgabeeinheiten (10) in einen Energiesparzustand erhaltenes oder durch ein festgestelltes Umschaltkriterium (C') erfüllt ist.
